(19) Europäisches Patentamt
European Patent Office
Office européen des brevets

(11) Publication number: **0 141 380**
**B1**

(12) # EUROPEAN PATENT SPECIFICATION

(45) Date of publication of patent specification: **18.04.90**

(51) Int. Cl.$^5$: **C 08 L 83/04**, C 08 J 3/28

(21) Application number: **84112845.7**

(22) Date of filing: **25.10.84**

(54) **Fast ultraviolet radiation curing silicone composition.**

(30) Priority: **26.10.83 US 545729**

(43) Date of publication of application:
**15.05.85 Bulletin 85/20**

(45) Publication of the grant of the patent:
**18.04.90 Bulletin 90/16**

(84) Designated Contracting States:
**CH DE FR GB IT LI SE**

(56) References cited:
**DE-A-2 441 035**
**DE-A-2 748 527**
**FR-A-1 508 750**
**FR-A-2 246 608**
**FR-A-2 343 026**
**US-A-2 842 520**
**US-A-3 816 282**
**US-A-4 270 840**

**Stabilization and Degradation of Polymers, p. 241-2 (Allara, Hawkins)**

**Photopolymerization of Surface Coatings, p. 36 (Roffey)**

(73) Proprietor: **DOW CORNING CORPORATION**
**P.O. Box 1767**
**Midland Michigan 48640 (US)**

(72) Inventor: **Lee, Chi-Long**
**1813 Brookfield**
**Midland Michigan (US)**
Inventor: **Lutz, Michael Andrew**
**1815 Wyllys**
**Midland Michigan (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

**EP 0 141 380 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a silicone composition which rapidly cures when exposed to ultraviolet radiation (UV).

Silicone compositions which can be cured by exposure to UV radiation utilize two types of curing reactions. One such reaction is a reaction of an alkenyl-containing polyorganosiloxane with a organosiloxane containing silicon-bonded hydrogen atoms in the presence of a UV photoinitiator. Another such reaction is a reaction of an alkenyl-containing polyorganosiloxane with a mercapto functional polyorganosiloxane in the presence of a UV photoinitiator.

DE—A—27 48 527 refers to an organopolysiloxane mixture comprising an organopolysiloxane having at least one mercaptoalkyl organosiloxane unit and an organopolysiloxane having at least one allyl containing organosiloxane unit having a viscosity of 820 Pa·s. The mixture comprises a photosensitizer to be cured by exposure to UV radiation.

FR—A—2 343 026 corresponding to GB—A—1 553 586 describes radiation-curable mercaptoalkyl vinyl polydiorganosiloxane compositions which have in the cured form improved release of adhesive materials. The composition may contain photosensitizer and gelation inhibitors, such as dihydric phenols and their alkylated derivatives.

One use of UV curable silicone compositions is to coat optical fibers. The optical fiber industry desires coatings which can be applied from one package and which cure rapidly upon exposure to UV radiation to give a coating with a predetermined refractive index. Making such compositions is a challenge because getting one property into an acceptable range frequently causes another property to become unacceptable. An object of this invention is to provide a composition which meets the desired property profile.

This object is achieved by a composition having a stable viscosity, which increases to less than two fold, after the composition has been heated at 100°C for 24 hours and being curable by ultraviolet radiation comprising a mixture of

(A) alkenyl functional, linear triorganosiloxy endblocked polydiorganosiloxane having a degree of polymerization of 30 to 1,000 where each silicon-bonded organic radical is selected from vinyl, methyl, phenyl, 3,3,3,-trifluoropropyl, ethyl, cyclohexenyl, allyl, and silacyclopentenyl, and having per molecule at least two silicon-bonded organic radicals selected from vinyl, cyclohexenyl, allyl, and silacyclopentenyl,

(B) mercapto functional crosslinker which is at least one material selected from mercapto functional polyorganosiloxanes and mercapto organic compounds, said mercapto functional polyorganosiloxanes are represented by the general formula

$$R''R'_2SiO(R'''R'SiO)_x(R'RSiO)_ySiR'_2R''$$

wherein each R is selected from mercaptoalkyl radicals having from 2 to 6 carbon atoms per radical; each R' is selected from methyl, phenyl, 3,3,3-trifluoropropyl, and ethyl; and each R'' is selected from the radicals of R and R'; and each R''' is selected from methyl and phenyl, on the average there being per molecule at least two mercaptoalkyl radicals, *x* is 0 or greater, *y* is 0 or greater, and the amount and kind of organic radicals represented by R, R', R'', and R''' being of such a nature as to make (A) and (B) compatible, and said mercapto organic compounds have at least two mercapto groups per molecule, consisting of atoms of sulfur, carbon, and hydrogen, and optionally oxygen, having a molecular weight less than 1,000, and being of such a nature as to make (A) and (B) compatible, and there being in said composition from 0.5 to 1.5 total alkenyl radicals per mercapto group,

(C) photosensitizer,

(D) an amine as storage stabilizer in an amount of from 0.01 to 1.5 weight percent based on the weight of the composition.

Optionally, the composition may comprise a reinforcing agent.

The compositions of this invention have a definite property profile covering both the uncured and cured states which permits them to be useful in coating optical fibers, particularly as the primary coat.

The compositions, which are encompassed in this invention are those defined as one package composiions. For purposes of this invention, "one package compositions" means all of the ingredients can be combined and then stored in a single package until cure is desired, at which time the material can be removed from the storage container, exposed to curing conditions, and it will cure to substantially the same property state after storage as it will prior to storage.

The compositions which are encompassed in this invention also do not double in 25°C viscosity when heated at 100°C for 24 hours, preferably they do not double in 25°C viscosity when heated at 100°C for seven days. The term "25°C viscosity" means that the viscosity being discussed is the viscosity as measured at 25°C. Such a property is important because in certain, in fact most, coating methods the composition will be exposed to high temperatures of hot optical fibers and because continuous coating methods are preferred and the most economical method of coating.

If the 25°C viscosity were to vary widely after heating indicating instability in the composition, the coating thickness could vary by an unacceptable degree and in the most severe case the composition could gel.

The compositions which are encompassed in this invention can be cured by exposure to ultraviolet

radiation which includes a wavelength of 365 nanometres in one second or less and 70 millijoules or less per square centimetre. This limitation expresses the fast curing nature of these compositions. Compositions which require larger energies or longer times to cure may find usefulness for certain applications but for purposes of this invention fast curing is necessary for today's manufacture of optical fibers. Compositions of this invention will cure in short periods of time using a medium pressure mercury vapor lamp. These cure times are short such as less than 0.3 second, preferably 0.1 second or less, when exposed to UV radiation to provide 70 millijoules or less per $cm^2$ of coating surface. Sources of UV provide a spectrum of wavelengths, but include the 365 nanometer wavelength for this invention. The UV source can be a mercury vapor lamp or other such known UV sources.

The compositions which are preferred and encompassed by this invention can be used as coating composition for coating substrates such as primary coatings for optical fibers as substrates. Such compositions which exhibit a refractive index of less than 1.45 are useful for reflective type coatings on optical fiber and those which exhibit a refractive index of greater than 1.48 are useful for dispersive type coatings on optical fiber. The refractive index used is that measured with sodium D line of 5893 $10^{-10}$ m at 25°C.

The compositions of this invention are made by mixing the following ingredients: (A) alkenyl functional, linear triorganosiloxy endblocked polydiorganosiloxane, (B) mercapto functional crosslinker, (C) photosensitizer, (D) specific storage stabilizer, and (E) optionally reinforcing agent.

Polydiorganosiloxane, (A), is substantially linear. In the manufacture of such polymers some branching can occur, however, the amounts are usually very small and do not detract from the basic linear nature of the polymer chain. The silicon-bonded organic radicals can be vinyl, methyl, phenyl, 3,3,3-trifluoropropyl, ethyl, cyclohexenyl, allyl, and silacyclopentenyl. (A) should have at least two alkenyl radicals per molecule selected from vinyl, allyl, cyclohexenyl, and silacyclopentenyl. Because of availability and economical considerations, the silicon-bonded organic radicals are preferably combinations of vinyl, methyl, and phenyl. The degree of polymerization for (A) is from 30 to 1,000, preferably 50 to 500, repeating siloxane units per average molecule.

For compositions which have a refractive index of less than 1.45 at 25°C, (A) is preferably a polydiorganosiloxane having a combination of methyl and vinyl radicals. Preferred (A) for the low refractive index compositions can be represented by the formula

(I) $$CH_2 = CH(CH_3)_2SiO[(CH_3)_2SiO]_m[(CH_2 = CH)(CH_3)SiO]_nSi(CH_3)_2CH = CH_2$$

where $m$ has an average value of from 80 to 500 and $n$ has an average value of 0 to 10 inclusive. The polymers of (A) where $n$ is a larger number can be used with (B) which have two mercapto groups per molecule.

For compositions which have a refractive index greater than 1.48 at 25°C, (A) is preferably a polydiorganosiloxane having a combination of vinyl, methyl and phenyl radicals. The preferred (A) for this use have at least 35 percent of the organic radicals being phenyl. The preferred (A) for high refractive index compositions can be represented by the formula

(II) $$CH_2 = CH(CH_3)_2SiO[(CH_3)_2SiO]_p[(CH_2 = CH)(CH_3)SiO]_q[(C_6H_5)_2SiO]_rSi(CH_3)_2CH = CH_2$$

where $p$ has an average value of from 50 to 500, $q$ has an average value of 0 to 10 inclusive and the average value of $r$ being such that the mol percent of $(C_6H_5)_2SiO$ units is 20 to 25 inclusive based on the total number of moles of siloxane units in the polydiorganosiloxane. The polymers of (A) where $q$ is a larger number can be used with (B) which have two mercapto groups per molecule.

The mercapto functional crosslinker, (B), can be either a mercapto functional polyorganosiloxane, a mercapto organic compound, or mixtures thereof. The mercapto functional crosslinkers are selected such that the polydiorganosiloxane, (A), and mercapto functional crosslinker, (B), are compatible. The combination of (A) and (B) are compatible when specific polymers or compounds are combined in the amounts to be used, and the resulting mixture does not separate into phases. A cloudy mixture which separates on standing, is not included within the scope of this invention. A cloudy mixture can be within the scope of this invention if the mixture does not separate on standing and if the storage, viscosity stability and cure properties are met. The selection for compatibility can readily be determined for any specific polymer or compound. Each kind of unit in (A) and its amount will influence the compatibility with (B) in which its kind and amount will influence the compatibility.

(B) should have at least two mercapto groups per molecule, preferably the number of mercapto groups in (B) is three or more. The molecules of (B) which contain two mercapto groups are used with (A) in which $n$ or $q$ have large values, such as 10. Preferably, (B) has three or more mercapto groups per molecule because present experimental work suggests that faster UV cures can be obtained with this type of composition.

The mercapto functional polyorganosiloxanes can be represented by the general formula

(III) $$R''R'_2SiO(R'''R'SiO)_x(R'RSiO)_ySiR'_2R''$$

where each R is a mercaptoalkyl of 2 to 6 carbon atoms per radical; each R′ is methyl, phenyl , 3,3,3-trifluoropropyl, or ethyl; each R″ is R or R′; and each R‴ is methyl or phenyl. There is on the average at least two mercapto groups per molecule, *x* is 0 or greater, and *y* is 0 or greater.

The low refractive index compositions, less than 1.45, preferred (B) can be represented by the average formula

(IV) $(CH_3)_3SiO([(CH_3)_2SiO]_w[R(CH_3)SiO])_zSi(CH_3)_3$

where R is γ-mercaptopropyl or mercaptoisobutyl, *w* has an average value of 3 to 8 and *z* has an average value of 2 to 8. For the high refractive index compositions, greater than 1.48, preferred (B) of the siloxane type can be represented by the average formula

(V) $(CH_3)_3SiO([(CH_3)_2SiO]_a[R(CH_3)SiO])_bSi(CH_3)_3$

where *a* has an average value of from 0 to 3, *b* has an average value of from 2 to 8, and R is γ-mercaptopropyl or mercaptoisobutyl.

The mercapto functional crosslinker (B) can also be a mercapto organic compound, especially for compositions which have a refractive index greater than 1.48. These mercapto organic compounds are also known in the art by terms such as "polythiols" and "polymercaptans". These mercapto organic compounds contain at least two mercapto groups (—SH) and consist of atoms selected from sulfur, hydrogen, and carbon, and optionally oxygen. Preferably, these mercapto organic compouds contain from 2 to 6 mercapto groups. Some examples are 2,2′-dimercaptodiethylether, dipentaerythritolhexa(3-mercaptopropionate), glycol dimercaptoacetate, glycol dimercaptopropionate, pentaerythritoltetra(3-mercapto-propionate) pentaerythritol tetrathioglycolate, polyethylene glycol dimercaptoacetate of the formula

$$HSCH_2COOCH_2(CH_2OCH_2)_{11}CH_2OOCCH_2SH,$$

polyethylene glycol di(3-mercaptopropionate) of the formula

$$HSCH_2CH_2COOCH_2(CH_2OCH_2)_{11}CH_2OOCCH_2CH_2SH,$$

trimethylolethane tri(3-mercaptopropionate), trimethylolethane trithioglycolate, trimethylolpropane tri(3-mercaptopropionate), and trimethylpropane trithioglycolate.

The photosensitizer (C) is a compound which will initiate a reaction between alkenyl radicals bonded to silicon atoms and mercaptoalkyl groups when irradiated with ultraviolet light. The photosensitizer is compatible in the composition. Compatibility of the photosensitizer can be determined by mixing the ingredients and the photosensitizing compound in an amount of one weight percent based on the weight of the composition and then mixing for up to 16 hours at room temperature, heating at 80°C for up to four hours, or both. The photosensitizer is said to be compatible if the composition is clear and the photosensitizer has dispersed. Besides compatibility, the photosensitizer should not cause the composition to react undesirably, such as gelling during storage. Some compounds which can be used as photosensitizer in this inventive composition are: benzophenone, acetonaphthone, acetophenone, benzoin methylether, benzoin isobutylether, 2,2-diethoxyacetophenone,

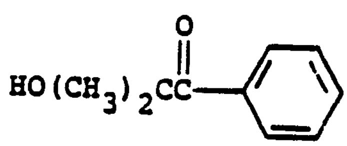

, and

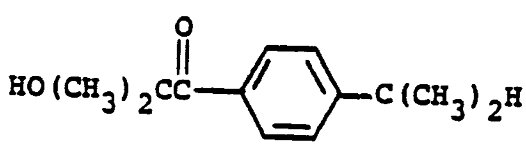

.

These photosensitizers represent some compounds which function to an acceptable degree of this invention. The most preferred photosensitizers are 2,2-diethoxyacetophenone and

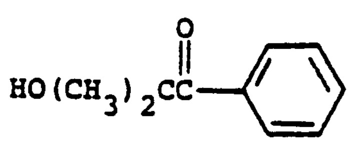

.

The viscosity stabilizer (D) is a material which is added to the composition to prevent the gellation of

the composition during storage and at temperatures as high as 100°C. This viscosity stabilizer is compatible in the composition and keeps the composition from doubling in 25°C viscosity when it is heated at 100°C for 24 hours. Preferably, the composition does not double in 25°C viscosity when heated at 100°C for seven days. Amines are observed to serve as viscosity stabilizers. Presently, the most preferred amine for this invention is 2-(diisopropylamino)ethanol. Other amines which are suitable, are trioctylamine or N-phenyl-2-naphthylamine. The viscosity stabilizers are used in amounts of 0.01 to 1.5 weight percent based on the weight of the composition, more preferably from 0.01 to 0.1 weight percent.

The compositions of this invention can contain reinforcing agent (E). The compositions preferably contain a reinforcing agent when a stronger or tougher cured product is desired or needed in the use. Preferably, a reinforcing agent is present in the composition for optical fiber coating applications. If the composition of this invention is used for other than optical fiber coating, such as for coating electrical equipment and devices, it can contain many kinds of fillers as reinforcing agents such as fumed silica which can be untreated or treated to make it hydrophobic such as with organosilanes, organosiloxanes, or organoisilazanes. For optical fiber coating applications, the reinforcing agent should be a material which does not substantially increase the opacity of the composition compared to the composition without the reinforcing agent. For optical fiber coating materials, the reinforcing agent is preferably present in an amount of at least five weight percent. The reinforcing agent for optical fiber coating should also be non-abrasive to a glass surface, especially a glass surface of fiber to be used as an optical fiber. The optical glass fiber can contain certain claddings on its surface. The reinforcing agent is preferably a benzene soluble silicone resin when the composition is used as a coating for optical fibers. One preferred benzene soluble silicone resin, as (E), contains trimethylsiloxy units, dimethylvinylsiloxy units, and $SiO_2$ units. The ratio of moles of

$$(CH_3)_3SiO_{0.5} + (CH_2=CH)(CH_3)_2SiO_{0.5}:SiO_2$$

is from 0.8:1 to 1.1:1 and contains 1.7 to 2.0 weight percent vinyl radical based on the weight of the resin.

Methods of mixing the ingredients (A) through (E) can be varied as long as the resulting composition cures when exposed to the UV energy as defined. The mixing method should not alter the one package stability and the viscosity stability. Preferably, (A) and (B) are mixed, and then (C) and (D) are added and mixed using conventional mixing equipment. When (E) is present, the preferred mixing procedure is to mix (A) and (E) and thereafter add the remaining ingredients. When (E) is the benzene silicone resin as defined above, the mixtures of (A) and (E) may require heating or heating at reduced pressure to remove solvent in which the benzene soluble silicone resin is kept. A mixture of (A) and the benzene soluble silicone resin in xylene can be heated to about 100°C at about 667 Pa to remove the xylene and form a homogeneous mixture of (A) and the resin. Sometimes a mixture of (A), (B), and (C) and optionally (E), prepared at room temperature, is slightly cloudy, but becomes clear indicating compatibility when (D) is added, Sometimes, if a mixture of (A), (B), and (C) and optionally (E), prepared at room temperature, does not become clear upon the addition of (D), heating the composition may produce clarity (compatibility) which will remain after the composition has cooled to room temperature.

Although compatibility and clarity are preferred, such features should not limit the use of the compositions of this invention in optical fiber coating applications, such as primary coatings and secondary coatings because some types of optical fiber coatings do not need to be clear to function properly. An important limitation of the compositions of this invention is the ability to cure rapidly as indicated by the UV radiation energy requirement. The UV cure at 70 millijoules or less per square centimetre coating surface should cure the composition in one second or less, preferably in less than 0.3 seconds. If the composition is slightly cloudy but does not separate on standing and cures in these times with the stated UV radiation, then it is covered by the present invention. The composition can be prepared and stored in most equipment but some metals may cause premature reaction or cures, such as certain ferrous metals. Also, light should be avoided both during processing and especially during storage.

The compositions of this invention are mixtures of ingredients (A) through (E) which have a ratio of alkenyl radicals per mercapto group of 0.5 to 1.5, thus the amounts of (A) and (B) are defined once the specific polymers are stated. The amounts of (A) and (B) can vary if (E) is a vinyl containing benzene soluble silicone resin. Also, the compositions preferably have a viscosity at 25°C in the range of 1 to 20 Pa·s, most preferred is 1 to 8 Pa·s.

Other ingredients which might be considered as useful in the present composition are those which do not deleteriously alter the one package stability, the viscosity stability, and the curing conditions. Such ingredients may be dyes, pigments, or other fillers. Some ingredients, such as certain fillers would not find utility as a prime coat for optical fibers because such fillers would be abrasive, however, other less sensitive applications may find such materials completely adequate. Another ingredient which might be added is a processing aid which helps improve the compatibility, viscosity or coating properties but otherwise does not substantially change the composition properties.

Preferred embodiments within the scope of the present invention are compositions which have a low refractive index, as measured by the sodium D line at 25°C, $n_D^{25}$ of less than 1.45, preferably about 1.42 and compositions which have a high refractive index, as meaured by the sodium D line at 25°C, of greater than 1.48, preferably from 1.48 to 1.55.

The low refractive index compositions are preferably obtained by mixing (A) a polydiorganosiloxane represented by formula (I), (B) a mercapto functional polyorganosiloxane of formula (IV), and (C) 2,2-diethoxyacetophenone or

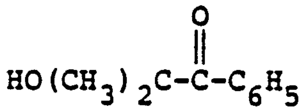

in an amount of 1 to 4 weight percent based on the total weight of the composition, and the ratio of vinyl radical per mercapto group is 0.57:1 to 1:1. These preferred compositions can also contain an amine which does not increase the opacity of the composition compared to the composition without the amine, preferably the amine is trioctylamine or 2-(diisopropylamino)ethanol which is present in an amount of from 0.5 to 1.5 weight percent based on the total weight of the composition. The most preferred low refractive index compositions are those which contain the benzene soluble silicone resin as defined above in amounts of 23 to 37.5 percent by weight based on the total weight of the composition because they are tougher and stronger. Those compositions which are described as preferred low refractive index compositions preferably do not contain any other ingredients which alter the refractive index such as increasing it to greater than 1.45. Most preferred low refractive index compositions have a refractive index of about 1.42.

The high refractive index composition, as preferred embodiments, can be of two types as identified by the type of crosslinker used, one using mercapto functional polyorganosiloxane and a second using a mercapto organic compound.

The preferred high refractive index compositions using the mercapto functional polyorganosiloxane crosslinker are those which are obtained by mixing (A) a polydiorganosiloxane represented by formula (II), (B) a mercapto functional polyorganosiloxane of formula (V), and (C) 2,2'-diethoxyacetophenone or

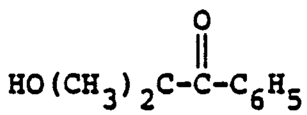

in an amount of 1 to 4 weight percent based on the total weight of the composition and the ratio of the vinyl radicals to mercapto groups is 0.57:1 to 1:1. These preferred compositions can also contain an amine which does not increase the opacity of the composition compared to the composition without the amine. The preferred high refractive index composition are those which have a refractive index measured by the sodium D line at 25°C of greater than 1.48, especially those of 1.48 to 1.55.

The other type of preferred high refractive index compositions are those which are obtained by mixing (A) a dimethylvinylsiloxy endblocked polydiorganosiloxane containing siloxane units selected from dimethylsiloxane units, methylphenylsiloxane units, and diphenylsiloxane units where at least 35 percent of the organic radicals are phenyl, (B) a mercapto organic compound selected from at least one of

$CH_3C(CH_2OOCCH_2SH)_3$, $[(HSCH_2CH_2COOCH_2)_3CCH_2]_2O$, $C(CH_2OOCCH_2CH_2SH)_4$, $C(CH_2OOCCH_2SH)_4$, $CH_3C(CH_2OOCCH_2CH_2SH)_3$, $CH_3CH_2C(CH_2OOCCH_2CH_2SH)_3$, and $CH_3CH_2C(CH_2OOCCH_2SH)_3$

and (C) 2,2-diethoxyacetophenone or

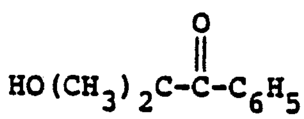

in an amount of 1 to 4 weight percent based on the weight of the total composition.

The compositions of this invention cure to elastomers which have a relatively low modulus, are tough, remain elastomeric over a broad temperature range, such as from 80°C to minus 60°C for the low refractive index compositions. The compositions of this invention cure by an addition type reaction and do not give off by-products.

Other uses of the compositions of this invention are for wood finishing, textile coating, paper and plastic varnishes, adhesives, printing inks, wire coatings, and electronic encapsulants.

The following examples are presented for illustrative purposes. All parts are parts by weight and viscosities are measured at 25°C unless otherwise stated.

## Example 1

A composition which cures to an elastomer by UV radiation was made by mixing 79.4 parts of a mixture of 32 weight percent xylene and 68 weight percent of benzene soluble silicone resin (Resin I) containing dimethylvinylsiloxy units, trimethylsiloxy units, and $SiO_2$ units where the ratio of the sum of the mols of dimethylvinylsiloxy units and trimethylsiloxy units to $SiO_2$ units was 1.05:1 and there was 1.9 weight percent vinyl radical in the resin with 100 parts of dimethylvinylsiloxy endblocked polydimethylsiloxane

having a viscosity of about 2 Pa·s (Polymer I). The resulting mixture was stripped of xylene by heating to 100°C at a pressure of about 670 Pa resulting in a clear polymer-resin blend (Blend I). A mercapto functional polyorganosiloxane of the average formula

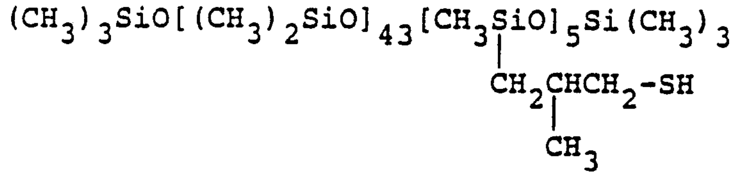

(Crosslinker I in an amount of 17.81 parts was mixed into 80.23 parts of Blend I and then 0.98 part of photosensitizer

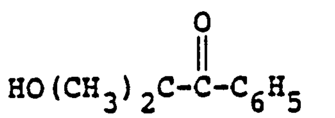 ,

and 0.98 part of 2-(diisopropylamino)ethanol was mixed to make a composition of this invention. The resulting composition was clear, had a viscosity of 2.08 Pa·s, and was stored in a container opaque to light including UV radiation. This composition remains unchanged in viscosity and cured properties after storage for over nine months.

The composition was coated on a monel wire of 125 µm to a thickness of between 25 and 115 µm and then exposed to UV radiation generated by four medium pressure mercury vapor lamps equidistant from the wire and each other, and also parallel to the wire. The composition was defined as cured when the surface was tack free and the physical properties was near maximum. The coated wire cured in less than 0.1 second. The coated wire speed was 200 metres per minute through the UV lamp configuration. A sample of the composition was evenly spread on an aluminum test panel in a thickness of about 200 µm, and then exposed to UV radiation of 24 millijoules or less per square centimetre using as a UV source a medium pressure mercury vapor lamp. The sample cured in 0.5 second. The cured sample was removed from the aluminum test panel, and cut into test pieces of 6.35 mm wide and about 3 cm long with a thickness of 125 to 150 µm. These test pieces were placed in an Instron tensile tester using a crosshead separation of 2 cm and then the elongation at break, the tensile strength at break, and modulus were measured. Six test pieces gave the average values of 3.17 MPa tensile strength at break, 160% elongation at break, and a 50% modulus of 0.34 MPa.

The cured composition had a refractive index $n_D^{25}$, of 1.416 and a Tg of −126°C. The cured elastomer had a 2.5% modulus as follows

| Temperature, °C | 2.5% Modulus, MPa |
|---|---|
| 80 | 0.017 |
| 20 | 0.022 |
| −20 | 0.026 |
| −60 | 0.059 |

Another composition was prepared as described above, the initial properties were very similar to the initial properties of the first prepared composition as indicated in Table I. The composition was heated at 100°C for the times indicated and then the viscosity at 25°C was measured, a sample was then cured and the tensile strength at break and the elongation at break were measured as described above. The UV cure time after each aging time was 0.3 second or less at 24 millijoules per square centimetre.

TABLE I

| Aging Time, Hours | Viscosity, Pa·s | Tensile, MPa | Elongation, % |
|---|---|---|---|
| 0 | 1.92 | 3.14 | 150 |
| 4 | 2.24 | 4.00 | 165 |
| 16 | 2.32 | 4.96 | 175 |
| 72 | 2.64 | 2.59 | 150 |
| 168 | 2.92 | 2.78 | 150 |

This example illustrates a low refractive index composition suitable for use as the prime coating on an optical fiber made by melt drawing a glass fiber, and while still hot, such as about 200°C, drawing said fiber through the composition and then exposing the coated fiber to UV radiation. This example also illustrates the one package storage capability, the viscosity stability at 100°C, and the rapid UV cure times.

The composition was stored in a container opaque to UV radiation for 4 hours and for two months and was then cured by exposure to UV radiation as stated above for making test pieces. The cure times were 0.5 second and 0.6 second respectively. The cured physical properties were obtained as described above and are reported in Table II.

TABLE II

| Storage time | Tensile, MPa | Elongation, % | 50% Modulus, MPa |
|---|---|---|---|
| 4 hours | 3.69 | 185 | 0.30 |
| 2 months | 3.59 | 185 | 0.31 |

This data illustrates the storage stability in a one package container. A composition was prepared as described above except the 2-(diisopropylamino)ethanol was left out. This composition gelled in a few days indicating that the viscosity stabilizer is necessary in this type of composition for long storage periods.

Example 2

A composition which cures to a high refractive index silicone elastomer was prepared by mixing 89.03 parts of a polydiorganosiloxane of the average formula

$$CH_2 = CH(CH_3)_2SiO[(CH_3)_2SiO_{77}[(C_6H_5)_2SiO)_{21}Si(CH_3)_2CH = CH_2,$$

7.12 parts of a mercapto functional polyorganosiloxane (Crosslinker II) of the average formula

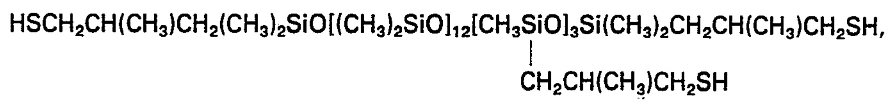

and 3.85 part of

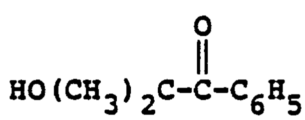

.

The resulting mixture was transparent and was packaged in a container opaque to UV radiation. This mixture had a viscosity of 1.7 Pa·s, and refractive index, $n_D^{25}$ of 1,488. Exposure to UV radiation from a medium pressure mercury vapor lamp in air which provided 24 millijoules per square centimetre of composition surface of about 200 μm thickness cured the composition in less than 0.3 second. The cured elastomer had a tensile strength at break of 0.31 MPa, an elongation at break of 215%, and a 2.5% modulus of 0.007 MPa at 25°C. This composition is useful as a prime coat for optical fibers where a refractive index of greater than 1.48 is preferred or required. This composition illustrates the capability of fast cure by UV radiation.

Example 3

A composition which can be cured by UV radiation to an elastomer was prepared by mixing 94.22 parts of a dimethylvinylsiloxy endblocked polymethylphenylsiloxane having an average of 48 methylphenylsiloxane units per molecule, 3.82 parts of

$$CH_3CH_2C(CH_2OOCCH_2CH_2SH)_3,$$

and 1.96 parts of

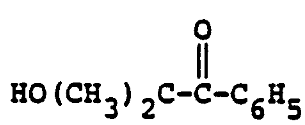

.

The resulting mixture was transparent, had a viscosity of 11.3 Pa·s, and a refractive index, $n_D^{22}$ of 1,550. A composition in a thickness of about 200 μm cured in less than 0.3 second to an elastomer having a tensile strength at break of 0.34 MPa, an elongation at break of 120%, and a 2.5% modulus of 0.007 MPa at 25°C and a 2.5% modulus of 0.79 MPa at −60°C. This composition illustrates the use of mercapto organic compound as the crosslinker for a siloxane polymer composition, a fast UV curing high refractive index composition, and a composition useful as the primary coating for optical fibers.

Example 4

Several compositions were prepared by mixing a polydiorganosiloxane and Resin I as described in Example 1 and then removing the xylene to make a blend of polymer and resin. The folowing ingredients were used to make compositions as defined by Table III.

Blend II — 47.2 parts of Resin I solids and 52.8 parts of dimethylvinylsiloxy endblocked polydimethylsiloxane having a viscosity of about 0.4 Pa·s (Polymer II)

Blend III — 50 parts of Resin I solids and 50 parts of Polymer I

Crosslinker III — trimethylsiloxy endblocked polyorganosiloxane having an average of 30 dimethylsiloxane units and 5 units of methyl(mercaptoisobutyl)siloxane

Crosslinker IV — trimethylsiloxy endblocked polyorganosiloxane having an average of 90 dimethylsiloxane units and 8 units of methyl(mercaptoisobutyl)siloxane

Crosslinker V — trimethylsiloxy endblocked polyorganosiloxane having an average of 18 dimethylsiloxane units and 3 units of methyl(mercaptoisobutyl)siloxane

Crosslinker VI — trimethylsiloxy endblocked polyorganosiloxane having an average of 24 dimethylsiloxane units and 4 units of methyl(mercaptoisobutyl)siloxane

Crosslinker VII — trimethylsiloxy endblocked polyorganosiloxane having an average of 61 dimethylsiloxane units and 7 units of methyl(mercaptoisobutyl)siloxane

Crosslinker VIII — trimethylsiloxy endblocked polyorganosiloxane having an average of 41 dimethylsiloxane units and 7 units of methyl(mercaptoisobutyl)siloxane

Crosslinker IV — trimethylsiloxy endblocked polyorganosiloxane having an average of 45 dimethylsiloxane units and 3 units of methyl(mercaptoisobutyl)siloxane

Crosslinker X — trimethylsiloxy endblocked polyorganosiloxane having an average of 93 dimethylsiloxane units and 5 units of methyl(mercaptoisobutyl)siloxane

Crosslinker XI — trimethylsiloxy endblocked polyorganosiloxane having an average of 86 dimethylsiloxane units and 12 units of methyl(mercaptoisobutyl)siloxane

Crosslinker XII — trimethylsiloxy endblocked polyorganosiloxane having an average of 20 dimethylsiloxane units and 5 units of methyl(mercaptoisobutyl)siloxane

The compositions shown in Table III were prepared to have a ratio of vinyl radical to mercapto group of 1.25:1 and each contained 0.29 part of 2,2'-diethoxyacetophenone and 0.29 part of trioctylamine. The compositions were made by blending the ingredients and the properties were measured as described in Example 1. The results for each of the compositions are shown in Table IV. These compositions illustrate the variety of mercapto functional polyorganosiloxane crosslinkers which have fast cure and can be used for a primary coat on optical fibers. The cure time shown in Table IV was for UV radiation of a film thickness of about 200 µm.

Example 5

A base was prepared by mixing 100 parts of a blend of 78.9 parts of dimethylvinylsiloxy endblocked polydimethylsiloxane having a viscosity of about 40 Pa·s and 21.1 parts to Resin I solids with 60 parts of five µm crushed quartz. A composition was prepared mixing 16 parts of the base, 1.27 parts of Crosslinker I, 0.17 part of

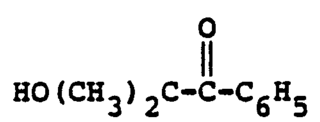

and 0.17 part of 2-(diisopropylamino)ethanol. This composition had a ratio of vinyl radical to mercapto group of 0.8:1. This composition in a film thickness of about 200 µm cured by UV radiation with one pass under two medium pressure mercury vapor lamps at a rate of 10 m per minute. The resulting cured elastomer had a tensile strength at break of 3.22 MPa, an elongation at break of 189%, and a 50% modulus of 0.66 MPa. This composition illustrates the fast cure nature in the presence of an extending filler.

Table III

| Composition | Blend No. | Blend Parts | Polymer No. | Polymer Parts | Crosslinker No. | Crosslinker Parts | Viscosity Pa·s |
|---|---|---|---|---|---|---|---|
| A | II | 19.08 | II x) | 5.35 | III | 4.57 | 0.96 |
| B | II | 19.08 | II x) | 4.74 | VIII | 4.74 | 1.12 |
| C | II | 19.08 | II x) | 2.50 | IV | 7.42 | 1.16 |
| D | II | 19.08 | II x) | 5.05 | V | 4.87 | 0.92 |
| E | II | 19.08 | II x) | 5.03 | VI | 4.89 | 0.92 |
| F | II | 19.08 | II x) | 3.37 | VII | 6.55 | 1.08 |
| G | III | 18 | I xx) | 6.76 | V | 4.24 | 2.20 |
| H | III | 18 | I xx) | 6.74 | VI | 4.26 | 2.20 |
| I | III | 18 | I xx) | 5.21 | VII | 5.79 | 2.32 |
| J | III | 18 | I xx) | 7.02 | III | 3.972 | 2.32 |
| K | III | 18 | I xx) | 2.52 | IX | 8.482 | 1.64 |
| L | III | 18 | I xx) | 6.871 | VIII | 4.129 | 2.72 |
| M | III | 18 | I xx) | 1.233 | X | 9.669 | 1.96 |
| N | III | 18 | I xx) | 6.305 | XI | 4.695 | 2.80 |
| O | III | 18 | I xx) | 4.393 | IV | 6.607 | 2.32 |
| P | III | 18 | I xx) | 7.647 | XII | 3.353 | 2.64 |
| Q | III | 18 | I xx) | 8.494 | II | 2.506 | 2.76 |

xx) Polymer I is the polymer of example 1 specified on page 14

x) Polymer II is a dimethylvinylsiloxy endblocked polydimethylsiloxane having a viscosity of about 0.4 Pa.s at 25°C.

Table IV

| Composition | Compatibility | Cure Time, sec. | Tensile Strength MPa | Elongation % | 50% Modulus MPa |
|---|---|---|---|---|---|
| A | Clear | 0.4 | 1.44 | 124 | 0.37 |
| B | Cloudy | 0.4 | 1.20 | 92 | 0.46 |
| C | Clear | 0.4 | 0.90 | 90 | 0.41 |
| D | Clear | 0.4 | 1.14 | 115 | 0.32 |
| E | Clear | 0.4 | 1.26 | 111 | 0.34 |
| F | Clear | 0.4 | 0.88 | 78 | 0.46 |
| G | Clear | 0.4 | 1.26 | 128 | 0.27 |
| H | Clear | 0.4 | 2.76 | 166 | 0.30 |
| I | Clear | 0.4 | 1.41 | 111 | 0.40 |
| J | Clear | 0.32 | 3.53 | 188 | 0.34 |
| K | Clear | 0.63 | 1.12 | 128 | 0.27 |
| L | Cloudy | 0.32 | 1.17 | 93 | 0.37 |
| M | Clear | 0.32 | 0.90 | 119 | 0.29 |
| N | Cloudy | 0.32 | 2.03 | 138 | 0.38 |
| O | Clear | 0.32 | 1.88 | 150 | 0.34 |
| P | Cloudy | 0.32 | 2.20 | 172 | 0.38 |
| R | Cloudy | 0.32 | 2.00 | 202 | 0.22 |

**Claims**

1. A composition having a stable viscosity, which increases to less than two fold, after the composition has been heated at 100°C for 24 hours and being curable by ultraviolet radiation comprising a mixture of

(A) alkenyl functional, linear triorganosiloxy endblocked polydiorganosiloxane having a degree of polymerization of 30 to 1,000 where each silicon-bonded organic radical is selected from vinyl, methyl, phenyl, 3,3,3,-trifluoropropyl, ethyl, cyclohexenyl, allyl, and silacyclopentenyl, and having per molecule at least two silicon-bonded organic radicals selected from vinyl, cyclohexenyl, allyl, and silacyclopentenyl,

(B) mercapto functional crosslinker which is at least one material selected from mercapto functional polyorganosiloxanes and mercapto organic compounds, said mercapto functional polyorganosiloxanes are represented by the general formula

$$R''R'_2SiO(R'''R'SiO)_x(R'RSiO)_ySiR'_2R''$$

wherein each R is selected from mercaptoalkyl radicals having from 2 to 6 carbon atoms per radical; each R' is selected from methyl, phenyl, 3,3,3-trifluoropropyl, and ethyl; and each R'' is selected from the radicals of R and R'; and each R''' is selected from methyl and phenyl, on the average there being per molecule at least two mercaptoalkyl radicals, $x$ is 0 or greater, $y$ is 0 or greater, and the amount and kind of organic radicals represented by R, R', R'', and R''' being of such a nature as to make (A) and (B) compatible, and said mercapto organic compounds have at least two mercapto groups per molecule, consisting of atoms of sulfur, carbon, and hydrogen, and optionally oxygen, having a molecular weight less than 1,000, and being of such a nature as to make (A) and (B) compatible, and there being in said composition from 0.5 to 1.5 total alkenyl radicals per mercapto group,

(C) photosensitizer,

(D) an amine as storage stabilizer in an amount of from 0.01 to 1.5 weight percent based on the weight of the composition.

2. The composition of claim 1, characterized by further comprising (E) a reinforcing agent.

3. The composition of claim 1, characterized in that the storage stabilizer is an amine which does not increase the opacity of the composition compared to the composition without the amine.

4. The composition of claims 1 to 3, characterized in that the storage stabilizer is selected from 2-(diisopropylamino)ethanol, trioctylamine, N-phenyl-2-naphthylamine.

5. The composition according to claim 2, characterized in that the reinforcing agent is present in an amount of at least five weight percent based on the total weight of the composition, said reinforcing agent not substantially increasing the opacity of the composition compared to the composition without the reinforcing agent.

6. Use of the composition according to claims 1 to 5 as coating composition for coating substrates.

7. Use of claim 6, characterized in that the substrate is an optical fiber.

**Patentansprüche**

1. Zusammensetzung mit stabiler Viskosität, die nach Erwärmen der Zusammensetzung für 24 Stunden auf 100°C um weniger als das Zweifache ansteigt und die durch ultraviolette Strahlung härtbar ist, enthaltend eine Mischung aus

(A) alkenylfunktionellem, linearen Polydiorganosiloxan mit blockierenden Triorganosiloxyendgruppen und einem Polymerisationsgrad von 30 bis 1.000, wobei jeder an Silizium gebundene organische Rest aus Vinyl, Methyl, Phenyl, 3,3,3-Trifluorpropyl, Ethyl, Cyclohexenyl, Allyl und Silacyclopentyl ausgewählt ist und jedes Molekül mindestens zwei an Silizium gebundene organische Reste aufweist, ausgewählt aus Vinyl, Cyclohexenyl, Allyl und Silacyclopentyl,

(B) mercaptofunktionellem Vernetzer, der mindestens ein Material ist ausgewählt aus mercaptofunktionellen Polyorganosiloxanen und organishen Mercaptoverbindungen, wobei die mercaptofunktionellen Polyorganosiloxane der allgemeinen Formel genügen

$$R''R_2'SiO(R'''R'SiO)_x(R'RsiO)_ySiR'_2R'',$$

in der jedes R aus Mercaptoalkylgruppen mit 2 bis 6 Kohlenstoffatomen pro Rest ausgewählt ist, jedes R' ist ausgewählt aus Methyl, Phenyl, 3,3,3-Trifluorpropyl und Ethyl und jedes R'' ist aus R- und R'-Resten ausgewählt und jedes R''' ist aus Methyl und Phenyl ausgewählt, wobei im Mittel pro Molekül mindestens zwei Mercaptoalkylgruppen vorhanden sind, *x* ist O oder größer, *y* ist O oder größer und die Menge und Art der durch R, R', R'' und R''' wiedergegebenen organischen Reste ist von einer solchen Natur, um (A) und (B) verträglich zu machen, und wobei die organischen Mercaptoverbindungen mindestens zwei Mercaptogruppen pro Molekül aufweisen, bestehend aus den Atomen von Schwefel, Kohlenstoff und Wasserstoff und gegebenenfalls Sauerstoff mit einem Molekulargewicht kleiner 1.000 und von einer solchen Natur, um (A) und (B) verträglich zu machen, und wobei in der Zusammensetzung von 0.5 bis 1.5 Gersamtalkenylreste pro Mercaptogruppe vorhanden sind,

(C) Photosensibilisator,

(D) ein Amin als Lagerstabilisator in einer Menge von 0,01 bis 1,5 Gew.-% bezogen auf Gewicht der Zusammensetzung.

2. Zusammensetzung nach Anspruch 1, dadurch gekennzeichnet, daß sie weiterhin (E) ein Verstärkungsmittel enthält.

3. Zusammensetzung nach Anspruch 1, dadurch gekennzeichnet, daß der Lagerstabilisator ein Amin ist, das die Opazität der Zusammensetzung im Vergleich zur Zusammensetzung ohne Amin nicht vergrößert.

4. Zusammensetzung nach Ansprüchen 1 bis 3, dadurch gekennzeichnet, daß der Lagerstabilisator aus 2-(Diisopropylamino)ethanol, Trioctylamin, N-phenyl-2-naphthylamin ausgewählt ist.

5. Zusammensetzung nach Anspruch 2, dadurch gekennzeichnet, daß das Verstärkungsmittel in einer Menge von mindestens 5 Gew.% bezogen auf Gesamtgewicht der Zusammensetzung vorhanden ist und das Verstärkungsmittel die Opazität der Zusammensetzung im Vergleich zur Zusammensetzung ohne Verstärkungsmittel nicht wesentlich erhöht.

6. Verwendung der Zusammensetzung nach Ansprüchen 1—5 als Beschichtungszusammensetzung zum Beschichten von Substraten.

7. Verwendung nach Anspruch 6, dadurch gekennzeichnet, daß das Substrat eine optische Faser ist.

**Revendications**

1. Une composition dont la viscosité est stable, celle-ci augmentant de moins de deux fois après que la composition a été chauffée à 100°C pendant 24 heures, et qui est durcissable par un rayonnement ultraviolet comprenant un mélange de

(A) un polydiorganosiloxane linéaire à fonctionnalité alcényle, bloqué à ses extrémités par des motifs triorganosiloxy, ayant un degré de polymérisation de 30 à 1000, où chaque radical organique lié au silicium est choisi parmi les radicaux vinyle, méthyle, phényle, 3,3,3-trifluoropropyle, éthyle, cyclohexényle, allyle et silacyclopentényle, et comportant, par molécule, au moins deux radicaux organiques liés au silicium choisi parmi les radicaux vinyle, cyclohexényle, allyle et silacyclopentényle,

(B) un agent de réticulation à fonctionnalité mercapto, qui est au moins une substance choisie parmi les polyorganosiloxanes à fonctionnalité mercapto et les composés organiques à fonctionnalité mercapto, lesdits polyorganosiloxanes à fonctionnalité mercapto étant représentés par la formule générale

$$R''R_2'SiO(R'''R'SiO)_x(R'RsiO)_ySiR_2'R''$$

dans laquelle chaque R est choisi parmi les radicaux mercaptoalkyles comptant 2 à 6 atomes de carbone par radical; chaque R' est choisi parmi les radicaux méthyle, phényle, 3,3,3-trifluoropropyle et éthyle; et chaque R'' est choisi parmi les radicaux R et R'; et chaque R''' est choisi parmi les radicaux méthyle et phényle, au moins deux radicaux mercaptoalkyles étant présents en moyenne par molécule, *x* est O ou plus, *y* est O ou plus, et la quantité et le type des radicaux organiques représentés par R, R', R'' et R''' étant de nature à rendre (A) et (B) compatibles, et lesdits composés organiques à fonctionnalité mercapto comportant au moins deux groups mercapto par molécule, étant constitués d'atomes de soufre, de carbone et d'hydrogène, et facultativement d'oxygène, ayant un poids moléculaire inférieur à 1000 et étant de nature à rendre (A) et (B) compatibles, au moins 0,5 à 1,5 groupe alcényle au total étant présent par groupe mercapto dans ladite composition,

(C) un photosensiblisateur,

(D) un amine comme stabilisant de conservation, en une quantité de 0,01 à 1,5 pour cent en poids par rapport au poids de la composition.

2. La composition de la revendication 1, caractérisée en ce qu'elle comprend de plus (E) un agent de renforcement.

3. La composition de la revendication 1, caractérisée en ce que le stabilisant de conservation est une amine qui n'augmente pas l'opacité de la composition comparativement à la composition ne contenant pas l'amine.

4. La composition des revendications 1 à 3, caractérisée en ce que le stabilisant de conservation est choisi parmi le 2-(diisopropylamino)éthanol, la trioctylamine et la N-phényl-2-naphtylamine.

5. La composition selon la revendication 2, caractérisée en ce que l'agent de renforcement est présent en une quantité d'au moins cinq pour cent en poids par rapport au poids total de la composition, ledit agent de renforcement n'augmentant pas sensiblement l'opacité de la composition comparativement à la composition ne contenant pas l'agent de renforcement.

6. Utilisation de la composition selon les revendications 1 à 5 comme composition de revêtement pour revêtir des substrats.

7. Utilisation de la revendication 6, caractérisée en ce que le substrat est une fibre optique.